# EUROPEAN PATENT APPLICATION

(11) **EP 4 571 973 A1**
(43) Date of publication of application: **18.06.2025**
(21) Application number: 23216929.2
(22) Date of filing: 14.12.2023
(51) Int. Cl.: H01M 50/213, H01M 50/242, H01M 50/249

(54) **BASE PLATE FOR BATTERY SYSTEM**

(71) Applicant: Rimac Technology LLC, 10431 Sveta Nedelja (HR)
(72) Inventor: Skrtic, Ivan, 47262 Generalski Stol (HR); Stainthorp, Nicholas, 10020 Novi Zagreb (HR); Skutari, Matko, 47000 Karlovac (HR)
(74) Representative: Sonnenberg Harrison Partnerschaft mbB

(57) **Abstract**

A base plate for a battery system is described. The base plate comprises a base body and at least two channels extending in a first direction and offset to each other in a second direction. The channels are configured for guiding gas such as vent gas away from at least one energy storage unit of the battery system. The at least two channels comprise a main volume and a support structure. The support structure is arranged at a first side of the main volume and comprises a first contact surface and a main surface. The first contact surface is contactable with an energy storage unit. The first contact surface is offset to the main surface in a third direction. The third direction is perpendicular to the first direction and the second direction.

## Description

### FIELD OF THE INVENTION

The field of the invention relates to a base plate for a battery system, a battery system for a vehicle and a vehicle comprising the battery system.

### BACKGROUND OF THE INVENTION

In recent years, there has been a growing awareness of the need to transition towards sustainable and environmentally friendly practices. One critical aspect of this transition is the adoption of electric vehicles as an alternative to traditional internal combustion engine vehicles. Electric vehicles offer significant benefits, such as reduced greenhouse gas emissions and lower operational costs. At the heart of these electric vehicles lies their energy storage system - the battery, which is also a main cost factor of electric vehicles. Batteries of future electric vehicles need to meet increasingly demanding mechanical and cost-related requirements.

Mechanical stability and rigidity and a robust design of electric vehicle batteries are beneficial to preserving overall vehicle safety and ensuring optimal performance while minimizing the risk of damage or failure during mechanical stress, such as sudden impacts or road irregularities. The battery must withstand various mechanical stresses, including vibrations, impacts, and extreme temperature variations, to ensure both safety and long-term functionality. Robust housing materials and design are beneficial for protecting the delicate and costly internal components and preventing hazardous situations, like short circuits or thermal runaway. Adequate cooling and thermal management systems are necessary to maintain optimal operating conditions.

Mechanical stability and rigidity of the battery ensures that the battery can endure the demands of everyday driving, preserving its efficiency and safety while also contributing to the vehicle's overall stability and crashworthiness. Moreover, a rigid battery structure helps preventing excessive chassis flex, resulting in more predictable and responsive handling and ultimately enhancing the overall driving experience and safety of the vehicle.

The internal design of a battery pack influences the overall mechanical stability and rigidity of the battery. The arrangement of battery modules and individual cells within the battery pack is significant. A well-organized layout of the battery modules and cells helps evenly distribute mechanical load and thus reducing stress concentrations. Battery packs can further incorporate internal structural reinforcements, such as metal or composite frames, to provide additional support and rigidity. These reinforcements help preventing deformation or twisting during dynamic vehicle movements, improving mechanical stability of the battery.

The manner in which battery cells and modules are connected and fastened inside the battery pack further affects the mechanical stability and rigidity of the battery. Interconnects and fastening mechanisms can ensure that the battery components remain securely in place and that loads can be distributed through the battery. The precision and quality of manufacturing processes for the battery are further essential. Accurate assembly and tight tolerances reduce the risk of structural imperfections and ensure consistent performance with regards to mechanical stability and rigidity.

The battery cells of an electric vehicle's battery can be coupled to each other and to the housing using foam overmolding. A polymeric foam material can be applied around individual battery cells during assembly of the battery to enhance protection of the cells and to improve mechanical stability and rigidity of the whole battery. Cells are placed and positioned within a mold such as a housing and a liquid foam material is injected into the mold, encasing the cells. As the foam cures, it adheres to the cells, creating a protective, cushioning layer and interconnecting the cells to each other and to the housing. Foam overmolding further provides impact resistance, thermal insulation, and vibration damping, safeguarding the cells from mechanical stresses while maintaining an efficient operating temperature.

The positioning of the battery cells before and during foam overmolding is an important step in the manufacturing process to ensure both the mechanical stability and rigidity of the battery. Individual battery cells are arranged into the mold in a specific configuration according to the design requirements of the battery. This arrangement typically includes both the orientation and physical placement of cells within the mold. Structural elements may be used to maintain precise spacing, positioning, and alignment of the cells. These structural elements help ensuring the cells remain properly positioned and maintaining consistent spacing during the foam overmolding process. Controlled cell positioning further ensures that the foam encapsulation effectively provides protection, insulation, and vibration damping to the battery cells.

The amount of the surface of the battery cells encapsulated with foam further contributes to the overall performance and safety of the battery. The foam provides a protective barrier around the battery cells. The more surface area of an individual cell covered by foam, the better the mechanical connection between the cells and to the housing and the mechanical protection against impacts, vibrations, and external forces. This helps prevent physical damage to the cells, preserving their structural integrity and functionality. The foam further acts as an insulating material, and the coverage of cell surfaces with foam helps maintain a more consistent internal temperature within the battery. This insulation minimizes heat transfer between cells, reducing the risk of thermal runaway and ensuring more stable operating conditions. The amount of surface area of the battery cells encapsulated with foam as well as the volume around the battery cells available for foaming are therefore important design parameters of the battery influencing the protection, thermal management, safety, and mechanical stability of the battery, all of which are important for the performance and long-term reliability of electric vehicle batteries.

Electric vehicle batteries further need to prevent dangerous thermal situations such as thermal runaway. Thermal runaway in a battery is an uncontrolled, self-accelerating process characterized by a rapid increase in temperature due to internal chemical reactions. Thermal runaway can lead to overheating, gas generation, and potentially catastrophic failure, posing severe safety risks. When a battery cell goes to thermal runaway, vent gases from this battery cell need to be expelled out of the battery pack through designated emergency venting ports or outlets to prevent these gases causing a thermal event in further battery cells. The vent gasses can be ducted away through venting channels, which allow the vent gasses to expand and lead the vent gasses toward the designated emergency venting ports or outlets of the housing. Additional components need to be provided in the battery pack to provide these venting channels and to ensure these venting channels are not blocked by foam entering the channels during the foam overmolding process.

It is beneficial to provide components which fulfil multiple functions in battery design to reduce costs and complexity of the battery. Known electric vehicle batteries, however, use separate components for providing venting channels and for positioning the battery cells before and during the foam molding process. Known electric vehicle batteries do not provide sufficient free volume around the battery cells for foam overmolding.

### SUMMARY OF THE INVENTION

Against this background, it is an objective of the present invention to provide an improved base plate for a battery system, an improved battery system for a vehicle and a vehicle comprising the improved battery system.

This objective is achieved by a base plate for a battery system having the features of claim 1. The objective is further achieved by a battery system having the features of claim 13 and a vehicle having the features of claim 19.

A base plate for a battery system is disclosed in the present document. The base plate comprises a base body and at least two channels extending in a first direction and offset to each other in a second direction. The second direction is preferably perpendicular to the first direction. The channels are configured for guiding gas such as vent gas away from at least one energy storage unit of the battery system. The at least two channels comprise a main volume and a support structure. The support structure is arranged at a first side of the main volume and comprises at least one first contact surface and at least one main surface. The at least one first contact surface is contactable with an energy storage unit. The at least one first contact surface is offset to the at least one main surface in a third direction. The third direction is perpendicular to the first direction and the second direction.

The present invention therefore relates to a component for a battery system, wherein the component provides multiple functions. The support structure of the base plate supports the energy storage units in the third direction and enables a defined positioning of the energy storage units with regards to the third direction (also called datuming of the energy storage units). The support structure further allows providing and increasing a free volume below the energy storage units available for structural foam overmolding. The adhesive surface area in contact with foam around the bottom of the energy storage units can thus be increased. The base plate therefore addresses the challenge in manufacturing of battery systems of compromising positioning of the energy storage units with overmolding of the energy storage units. The benefit of maximizing the volume of structural foam leads to improved energy storage unit mechanical stability and structural performance of the battery system.

The base plate further provides channels configured as venting channels to allow vent gases to be ducted away toward a designated emergency venting port or outlet of a housing of the battery. The base plate therefore allows to provide the functions of positioning the energy storage units in the third direction, providing venting channels for the energy storage units and allowing enhanced foam overmolding around the bottom of the energy storage units with one integral component only.

The base plate is further designed to be manufactured using well-established plastic blow molding technology and/or thermoforming technology and/or vacuum forming technology, providing for cost-effectiveness and scalability to a wide range of different battery system dimensions.

The term "base plate" refers to a component of a battery system such as a vent plate. The base plate is configured for supporting a plurality of energy storage units and further provides the channels for leading away the vent gases. The base plate preferably has a plate-like shape with greater dimensions in a plane defined by the first direction and the second direction and a smaller dimension in the third direction compared to the dimensions in the first direction and the second direction.

The base plate can be made from plastic materials suitable for plastic blow molding such as Acrylic (PMMA), Acrylonitrile Butadiene Styrene (ABS), Polycarbonate (PC), Polyethylene (PE), Polyethylene terephthalate glycol (PETG), Polypropylene (PP), Polystyrene (PS), and Polyvinyl chloride (PVC). The base plate can alternatively or additionally be made from a different material and/or using a different manufacturing technology.

The term "battery system" refers to a device designed to store electrical energy and supply electrical energy to a load connected to the battery system. The battery system preferably is further designed to receive electrical energy which is then be stored. The battery system can be an electrochemical device such as a battery or rechargeable battery. When connected to a circuit, the battery system transfers electrons, creating electrical current. The battery system can be an AC battery supplying alternating current or can be a DC battery supplying direct current. The battery system may alternatively be or include a battery which can supply both alternating current and direct current. The battery system according to the invention can flexibly be used in different application scenarios. The battery system can be a battery pack comprising a plurality of battery modules or can alternatively be a battery module comprising a plurality of energy storage units. The battery system can be particularly but not exclusively used and/or suitable as a traction battery for a battery electric vehicle (BEV), a plug-in hybrid electric vehicle (PHEV), a hybrid electric vehicle (HEV), or a fuel cell electric vehicle (FCEV).

The term "base body" refers to a plate-like structure which accommodates or includes the at least two channels and the support structure.

The term "channel" refers to a longitudinal structure substantially extending in the first direction. The channel has a wall with a hollow cross-section in a plane perpendicular to the first direction. The hollow cross-section has a substantially trapezium-like shape to enhance vacuum forming during manufacturing of the base plate. The hollow cross-section can alternatively or additionally have a substantially rectangular shape or any other suitable shape. The channel is configured to guide fluids such as gas along the first direction. The base body can partially be a wall of the channel.

The term "main volume" refers to a free or empty volume encompassed within the channel and provided for receiving and guiding the fluids along the first direction. The main volume is not filled with any solid material and can be filled with air.

The term "support structure" refers to a structure integrally provided as a part of the wall of the channel at a first side of the channel. The support structure allows an energy storage unit to be placed on the support structure to support and position the energy storage unit in the third direction while ensuring sufficient free volume for foam overmolding below the energy storage unit, i.e. between the channel and the energy storage unit and/or between the base body and the energy storage unit.

The term "first side" refers to a side of the channel facing substantially in the third direction and facing away from the base body. The energy storage units which will be placed onto the base plate will be arranged at the first side.

The term "contact surface" refers to a surface of the support structure facing substantially in the third direction and configured for being in contact with the at least one energy storage unit in a state in which the at least one energy storage unit is arranged on the base plate and is supported by the base plate and positioned in the third direction by the base plate. The at least one first contact surface can be a flat surface or can have a curvature. The at least one first contact surface is a specifically formed part of the wall of the channel.

The term "energy storage unit" refers to individual components and/or units within the battery system that store and/or deliver electrical energy. These energy storage units can include single battery cells, battery modules having multiple battery cells, supercapacitors, photovoltaic cells, fuel cells, electromechanical power converters, and/or capacitive energy sources or any other energy storage devices capable of storing and delivering electrical energy. The battery cells can be cylindrical cells.

The term "contactable with an energy storage device" refers to the capability of the support structure to be in contact with at least one of the energy storage devices of the battery system to be arranged on the base plate. This contact preferably enables the base plate to support the at least one energy storage device and to define the position in the third direction of the at least one storage device within the battery system. The support structure can be in direct contact with the energy storage units but can alternatively or additionally also be in indirect contact with the energy storage units in case further components are arranged between the support structure and the energy storage units in the state in which the energy storage units are arranged on the base plate and are supported by the base plate and positioned in the third direction by the base plate.

The term "main surface" refers to a further surface of the support structure facing substantially in the third direction and configured for not being in contact with the at least one energy storage unit in the state in which the at least one energy storage unit is arranged on the base plate and is supported by the base plate and positioned in the third direction by the base plate. The main surface can be a flat surface or can have a curvature. The at least one main surface is a specifically formed part of the wall of the channel. The at least one main surface is offset to the at least one first contact surface in the first direction, in the second direction, and in third direction to ensure that the main surface is not in contact with the at least one energy storage unit in the state in which the at least one energy storage unit is arranged on the base plate and is supported by the base plate and positioned in the third direction by the base plate. A free volume between the main surface and a bottom surface of the at least one energy storage unit is therefore kept for foam overmolding to increase the amount of foam below the at least one energy storage unit.

According to a first aspect, the at least two channels can be spaced apart in the second direction to form at least one open volume. The at least one open volume extends in the first direction.

The term "open volume" refers to a volume which extends substantially in the first direction and which is confined or enclosed on three sides by the base plate, in particular by two of the at least two channels and by the base body of the base plate. The open volume is not confined or enclosed at a side facing in the third direction.

The open volume allows foam injected into the battery system during foam overmolding to flow or expand substantially along the first direction through the open volume. The distribution of the foam within the battery system can thus be facilitated.

According to a second aspect, the base plate can have a first end and a second end. The first end and the second end are offset to each other in the first direction and the at least two channels have an opening at the first end and/or the second end only. In other words, the at least two channels do not comprise any openings in the wall of the at least two channels along the extension of the at least two channels in the first direction.

Foam is therefore not able to enter the main volume of the at least two channels during the injection, the expansion and the curing of foam during the foam overmolding process. This prevents the at least two channels from being blocked by foam inside the at least two channels. The capability of the at least two channels to guide the vent gases can therefore be securely maintained.

According to a third aspect, the at least one first contact surface and the at least one main surface can be arranged in a repeating pattern. This enables to provide sufficient support for the at least one energy storage unit while ensuring sufficient free volume below the at least one energy storage unit for foam to enter. The costs for manufacturing can further be reduced by using the repeating pattern.

The repeating pattern can differ or be offset for two adjacent ones of the at least two channels. Alternatively or additionally, the repeating pattern can be the same for two adjacent ones of the at least two channels. The pattern for two adjacent ones of the at least two channels can be offset by half the diameter of the at least one energy storage unit. This enables space-saving packaging of the at least one energy storage unit in the battery system.

According to a fourth aspect, the support structure can further comprise at least one second contact surface. The at least one second contact surface can be contactable with an energy storage unit.

According to a fifth aspect, the at least one first contact surface and the at least one second contact surface can be offset to each other in the first direction and/or in the second direction.

The support and the stability of the at least one energy storage unit can be enhanced by providing the at least one second contact surface which supports the at least one energy storage unit at a second position in addition to the at least one first contact surface. Sufficient free volume below the at least one energy storage unit is further provided by arranging the at least one first contact surface and the at least one second contact surface offset to each other in the second direction and separated from each other by the at least one main surface.

According to a sixth aspect, the at least one second contact surface and the at least one main surface can be arranged in a repeating pattern offset in the first direction with respect to the repeating pattern of the at least one first contact surface and the at least one main surface.

According to a seventh aspect, the base plate can further comprise a plurality of first contact surfaces. The plurality of first contact surfaces can have a rectangular shape extending substantially in the first direction.

The plurality of the first contact surfaces allows to securely support a plurality of the energy storage units on the base plate. The rectangular shape and particularly the substantial extension in the first direction of the rectangular shape of the plurality of first contact surfaces allows the plurality of energy storage units to be placed onto the base plate and to be moved to their desired position by sliding or shifting over the plurality of first contact surfaces in the first direction during assembly of the battery system. The plurality of the first contact surfaces can alternatively or additionally have rounded edges and/or a different shape such as an elliptical shape or any other suitable shape.

According to an eighth aspect, adjacent ones of the plurality of first contact surfaces in the first direction can be spaced apart by a void.

The term "void" refers to an empty space between the adjacent ones of the plurality of first contact surfaces allowing foam inserted or injected into the battery system during foam overmolding to flow or expand substantially along the second direction through the void. The foam can therefore pass the void to reach the free volume between the at least one main surface and the at least one energy storage unit. The foam can further pass the void to flow or expand from one of the at least one open volume to a further one of the at least one open volume. The distribution of the foam within the battery system can thus be further facilitated.

According to a ninth aspect, the support structure can further comprise a plurality of third contact surfaces contactable with an energy storage unit and a plurality of second contact surfaces contactable with an energy storage unit. The plurality of second contact surfaces and the plurality of third contact surfaces can have a rectangular shape extending substantially in the first direction. The plurality of first contact surfaces can be arranged in a row extending in the first direction, the plurality of second contact surfaces can be arranged in a row extending in the first direction, and the plurality of third contact surfaces can be arranged in a row extending in the first direction. The row of the plurality of first contact surfaces, the row of the plurality of second contact surfaces, and the row of the plurality of third contact surfaces can be offset to each other in the second direction. Adjacent ones of the plurality of second contact surfaces in the first direction can be spaced apart by a void and adjacent ones of the plurality of third contact surfaces in the first direction can be spaced apart by a void. The plurality of third contact surfaces and the at least one main surface can be arranged in a repeating pattern offset in the first direction with respect to the repeating pattern of the plurality of first contact surfaces and the at least one main surface and with respect to the repeating pattern of the plurality of second contact surfaces and the at least one main surface.

The support and the stability of the at least one energy storage unit can be further enhanced by providing the plurality of third contact surfaces which support the at least one energy storage unit at a third position in addition to the plurality of first contact surfaces and the plurality of second contact surfaces. Sufficient free volume below the at least one energy storage unit is further provided by arranging the respective rows of the plurality of first contact surfaces, the plurality of second contact surfaces and the plurality of third contact surfaces offset to each other in the second direction and separated from each other by the at least one main surface.

The foam injected into the battery system during foam overmolding is further allowed to flow or expand substantially along the second direction through the voids between adjacent ones of the plurality of first contact surfaces, the plurality of second contact surfaces and the plurality of third contact surfaces. The foam can therefore pass the void to reach the free volume between the at least one main surface and the at least one energy storage unit. The foam can further pass the voids to flow or expand from one of the at least one open volume to a further one of the at least one open volume. The distribution of the foam within the battery system can thus be further facilitated.

Arranging the respective repeating patterns of the plurality of first contact surfaces, the plurality of second contact surfaces and the plurality of third contact surfaces being offset to each other in the first direction reduces the risk of the at least one energy storage unit getting stuck to ones of the plurality of first contact surfaces, the plurality of second contact surfaces and the plurality of third contact surfaces while sliding or shifting the at least one energy storage unit during assembly of the battery system. This further facilitates easier sliding or shifting of the at least one energy storage unit on the plurality of first contact surfaces, the plurality of second contact surfaces and the plurality of third contact surfaces during assembly of the battery system and therefore facilitates an easier and less time-consuming assembly process.

According to a tenth aspect, the at least one open volume can extend in the third direction below a bottom surface of the base body, such that the at least one open volume extends farther in the third direction than the at least two channels.

The term "bottom surface" refers to a surface of the base body and of the base plate which faces away from the at least one energy storage unit and which faces a part of a housing of the battery system. The at least one open volume extending in the third direction below a bottom surface of the base body allows foam to enter the space below the base body. The cured foam can serve as a contact portion to contact the housing of the battery system, such that the base body does not contact the housing in an assembled state of the battery system. The cured foam between the housing and the base plate can therefore serve as vibration absorbing spacer between the base plate and the housing. This enhances the durability of the battery system by reducing vibrations being transferred from the housing to the base plate and to the energy storage units which could be damaged by those vibrations during the lifetime of the battery system. The cured foam between the housing and the base plate further provides structural stability since the cured foam will have flexible characteristics allowing the base plate to be flexible in case of impact from the bottom.

According to an eleventh aspect, the base plate can further comprise at least one flange arranged at least on one side of the base plate. The term "flange" refers to a flat, protruding rim or collar, typically used to facilitate connecting, strengthening, aligning or sealing of components. The flange can be configured as a matching counterpart for a part of the housing of the battery system to allow the flange and the part of the housing to fit closely together to prevent foam injected into the battery system during foam overmolding to pass through the contact area of the base plate and the housing.

A battery system is further disclosed in the present document. The battery system comprises a base plate as claimed herein before and hereinafter, and a plurality of energy storage units arranged on the base plate. The plurality of energy storage units are supported and positioned in the third direction by the base plate.

According to a twelfth aspect, each of the plurality of energy storage units can comprise a vent burst disc. The vent burst disc of each of the plurality of energy storage units can face the base plate.

The term "vent burst disc" refers to a safety feature designed to release excess pressure within ones of the plurality of energy storage units. The vent burst disc can comprise a thin, pressure-sensitive membrane which ruptures if internal pressure of the ones of the plurality of energy storage units reaches a dangerous level, preventing potential hazards like overcharging or thermal runaway. This controlled venting of gas from the ones of the plurality of energy storage units helps protect the battery system from damage or explosion. The vent gases passing the vent burst disc can further penetrate the wall of the channel of the base plate located below the respective vent burst disc. The vent gases passing the vent burst disc can also penetrate cured foam arranged between the vent burst disc and the wall of the channel if necessary. The vent gases can thus be guided away through the channel and thus cannot affect further ones of the plurality of energy storage units.

According to a thirteenth aspect, the battery system can further comprise foam between at least one main surface of the base plate and at least one of the plurality of energy storage units. The foam arranged between at least one main surface of the base plate and the at least one of the plurality of energy storage units is located below the at least one of the plurality of energy storage units and therefore increases the amount of surface area of the at least one of the plurality of energy storage units encapsulated with foam. The mechanical stability and rigidity of the battery system as well as the protection of the at least one of the plurality of energy storage units is therefore enhanced.

According to a fourteenth aspect, the battery system can further comprise a housing and foam in at least one open volume of the base plate. The term "housing" can also be referred to as an enclosure or case and preferably refers to a protective container or casing that encompasses some or all components of the battery system. The housing provides physical protection to the components inside and often incorporates features like insulation, ventilation, and/or sealing to ensure safe and efficient operation of the battery system. The housing can also protect the battery system from water and moisture exposure. The foam in the at least one open volume allows to reduce vibrations being transferred from the housing to the base plate and to the energy storage units.

A vehicle is further disclosed in the present document. The vehicle comprises a battery system as claimed herein before and hereinafter. The vehicle can be a battery electric vehicle (BEV), a plug-in hybrid electric vehicle (PHEV), a hybrid electric vehicle (HEV), or a fuel cell electric vehicle (FCEV) and the battery system can be used as a traction battery.

Advantageous aspects and/or embodiments of the present disclosure are the subject matter of the dependent claims. Any and all combinations of at least two features disclosed in the description, the claims, and/or the figures fall within the scope of the present disclosure. Naturally, the explanations given in connection with the base plate equivalently relate to the battery system and/or the vehicle according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features or aspects and/or embodiments that are described above or below with respect to the exemplary aspects and/or embodiments. In this case, a person skilled in the art will also add individual aspects as improvements or supplementations to the respective basic form of the invention.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

### DESCRIPTION OF THE FIGURES

FIG. 1 shows a perspective view of a first embodiment of a base plate.
FIG. 2 shows a perspective view of a second embodiment of a base plate.
FIG. 3 shows a cross-sectional view of a first embodiment of a battery system.
FIG. 4 shows a perspective view of a second embodiment of a battery system.
FIG. 5 shows a perspective view of a third embodiment of a base plate.
FIG. 6 shows a perspective view of a fourth embodiment of a base plate.
FIG. 7 shows a perspective view of a fifth embodiment of a base plate.
FIG. 8 shows a perspective view of a sixth embodiment of a base plate.
FIG. 9 shows a perspective view of a seventh embodiment of a base plate.
FIG. 10 shows a perspective view of an eight embodiment of a base plate.
FIG. 11 shows a perspective view of a ninth embodiment of a base plate.
FIG. 12 shows a perspective view of a tenth embodiment of a base plate.
FIG. 13 shows a perspective view of a eleventh embodiment of a base plate.
FIG. 14 shows a cross-sectional view of a third embodiment of a battery system.
FIG. 15 shows a cross-sectional view of a twelfth embodiment of a base plate.

### DETAILED DESCRIPTION OF THE INVENTION

The invention will now be described on the basis of the figures. It will be understood that the aspects and/or embodiments of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

Unless indicated to the contrary, elements that are the same or functionally similarly have been given the same reference signs in the figures. It should also be noted that the illustrations in the figures are not necessarily true to scale.

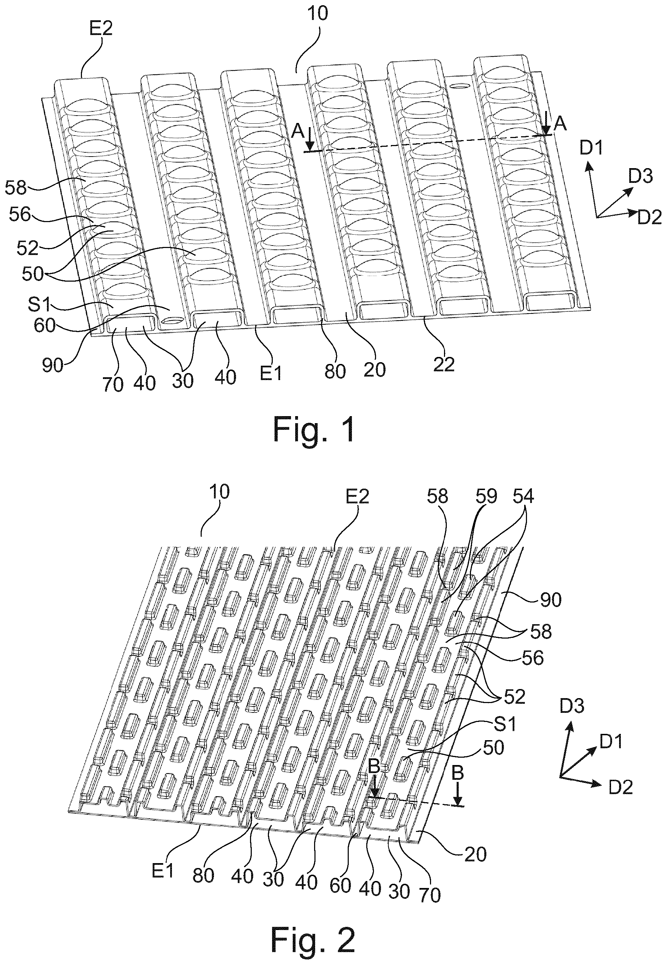

FIG. 1 shows a perspective view of a first embodiment of a base plate 10. The base plate comprises a base body 20 with a rectangular plate-like shape extending substantially in a first direction D1 and a second direction D2. The second direction D2 is perpendicular to the first direction D1. The base plate 10 has a bottom surface 22 facing away from a third direction D3. The third direction D3 is perpendicular to the first direction D1 and to the second direction D2.

The base plate 10 further comprises six channels 30 extending substantially in the first direction D1. The number of channels 30 can be varied. The channels 30 are arranged in parallel to each other and are evenly distributed along the second direction D2, with each two adjacent ones of the channels 30 being spaced apart from each other in the second direction D2. The channels 30 comprise a main volume 40 extending substantially in the first direction D1 and a wall 80 confining or enclosing the main volume 40. The channels 30 are integrally formed with the base body 20, such that the base body 20 forms part of a wall 80 of the channels 30. The channels 30 can alternatively or additionally be separate components attached to the base plate 20.

The channels 30 have a hollow cross-section with a trapezium-like shape with rounded edges. All the six channels 30 are designed similarly. The base plate 10 can alternatively or additionally comprise channels 30 of different shape and/or different dimensions.

The channels 30 further comprise a support structure 50. The support structure 50 is arranged at a first side S1 of the channels 30. The first side S1 is located at an outer surface of the wall 80 of the channels 30, the outer surface and the first side S1 facing substantially in the first direction D1.

The support structure 50 comprises a plurality of first contact surfaces 52 and a plurality of main surfaces 56. The plurality of first contact surfaces 52 have the shape of a spherical segment. The plurality of main surfaces 56 have a flat shape and are defined as the surface of the channels 30 at the first side S1 which does not form the plurality of first contact surfaces 52. The plurality of first contact surfaces 52 extend substantially farther in the third D3 as the plurality of main surfaces 56.

The plurality of first contact surfaces 52 and the plurality of main surfaces 56 are arranged in a repeating pattern with one of the plurality of first contact surfaces 52 arranged adjacent to one of the plurality of main surfaces 56 in the first direction D1. The plurality of first contact surfaces 52 and the plurality of main surfaces 56 are thus arranged alternatingly in the first direction D1. The repeating pattern for two adjacent ones of the channels 30 is offset by half the diameter of an energy storage unit 110 to be arranged on the base plate 10.

The plurality of first contact surfaces 52 and the plurality of main surfaces 56 are integrally provided with the wall 80 of the channels 30, therefore forming parts of the outer surface of the channels 30.

A plurality of voids 58 are formed respectively between two adjacent ones of the plurality of first contact surfaces 52 arranged on one of the channels 30. Open volumes 60 are formed between two adjacent ones of the channels 30. The open volumes 60 extend substantially in the first direction D1 and are confined or enclosed by the walls 80 of the two adjacent ones of the channels 30 and the base body 20. The open volumes 60 are not confined to the third direction D3.

The base plate 10 has a first end E1 and a second E2. The first end E1 and the second end E2 are located at opposite ends of the base plate 10 in the first direction D1. The channels 30 further comprise openings 70 at the first end E1 and at the second end E2. The main volume 40 is therefore not confined in the first direction D1 and opposite to the first direction D 1.

The base plate 10 further comprises two flanges 90 extending in the first direction and located at opposite ends of the base plate 10 in the second direction D2. The two flanges 90 have the form of a flat rectangular extension of the base body 20.

FIG. 2 shows a perspective view of a second embodiment of a base plate 10. The support structure 50 further comprises a plurality of second contact surfaces 54 and a plurality of third contact surfaces 59 in addition to the plurality of first contact surfaces 52. The plurality of first contact surfaces 52 are arranged in a row extending in the first direction D 1. Two adjacent ones of the plurality of first contact surfaces 52 are arranged offset to each other forming a respective void 58. The plurality of second contact surfaces 54 are arranged in a row extending in the first direction D1. Two adjacent ones of the plurality of second contact surfaces 54 are arranged offset to each other forming a respective void 58. The plurality of third contact surfaces 59 are arranged in a row extending in the first direction D1. Two adjacent ones of the plurality of third contact surfaces 59 are arranged offset to each other forming a respective void 58.

The row of the plurality of first contact surfaces 52, the row of the plurality of second contact surfaces 54, and the row of the plurality of third contact surfaces 59 are offset to each other in the second direction D2, respectively. The row of the plurality of second contact surfaces 54 is centered along the second direction D2 between the row of the plurality of first contact surfaces 52 and the row of the plurality of third contact surfaces 59.

The plurality of first contact surfaces 52, the plurality of second contact surfaces 54, and plurality of third contact surfaces 59 have a rectangular shape extending substantially in the first direction D1. The dimensions of the plurality of first contact surfaces 52 and the plurality of third contact surfaces 59 are the same. The plurality of second contact surfaces 54 have a smaller extension in the first direction D1 than the plurality of first contact surfaces 52 and the plurality of third contact surfaces 59. The voids 58 between two adjacent ones of the plurality of first contact surfaces 52 have the same dimensions as the voids 58 between two adjacent ones of the plurality of third contact surfaces 59. The voids 58 between two adjacent ones of the plurality of second contact surfaces 54 have a greater extension in the first direction D1 than the voids 58 between two adjacent ones of the plurality of first contact surfaces 52 and the voids 58 between two adjacent ones of the plurality of third contact surfaces 59.

The plurality of first contact surfaces 52 and the main surface 56 or the respective voids 58 are arranged in a repeating pattern and the plurality of third contact surfaces 59 and the main surface 56 or the respective voids 58 are also arranged in a repeating pattern. The row or the repeating pattern of the plurality of first contact surfaces 52 is offset in the first direction D1 to the row or the repeating pattern of the plurality of third contact surfaces 59.

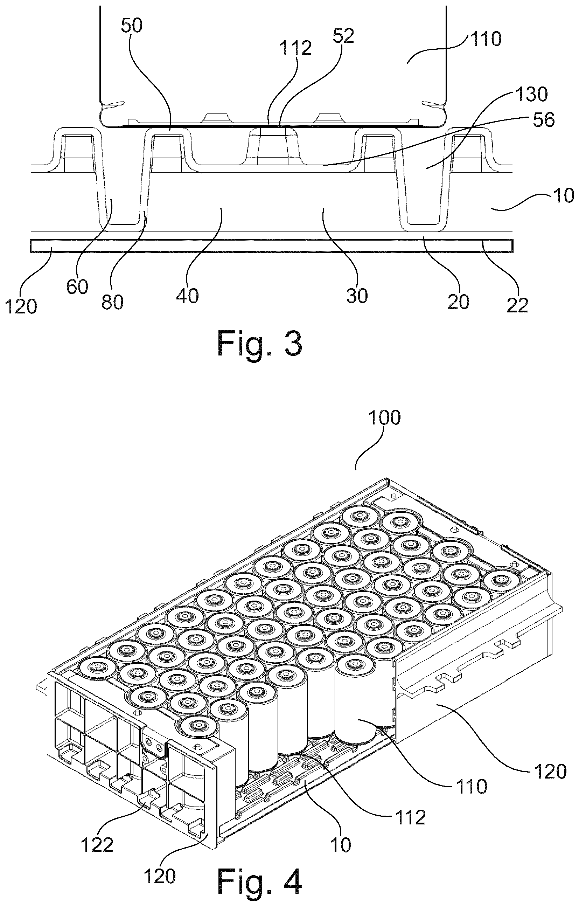

FIG. 3 shows a cross-sectional view of a first embodiment of a battery system 100. The battery system 100 comprises a base plate 10 according to the first embodiment and shown along section line A-A of FIG. 1. The battery system 100 further comprises a housing 120 encompassing the components of the battery system 100. The base plate 10 is arranged at an inside surface of the housing 120.

The battery system 100 further comprises a plurality of energy storage units 110 in the form of cylindrical battery cells, of which only one is shown in FIG. 3. The energy storage unit 110 is arranged on top of one of the plurality of first contact surfaces 52 of one of the channels 30 of the base plate 10. The energy storage unit 110 is centered with regards to the respective first contact surface 52. The energy storage unit 110 comprises a vent burst disc 112 arranged at a bottom surface of the energy storage unit 110 and arranged in a central position above the respective first contact surface 52.

The battery system 100 further comprises cured foam 130 between the base plate 10 and the energy storage unit 110. The spherical segment shape of the plurality of first contact surfaces 52 provides free volume between the respective channel 30 and the energy storage unit 110 which is occupied by cured foam. The plurality of main surfaces 56 further provide free volume between the respective channel 30 and the energy storage unit 110 which is occupied by cured foam. The main volumes 40 of the channels 30 is empty and does not contain any cured foam.

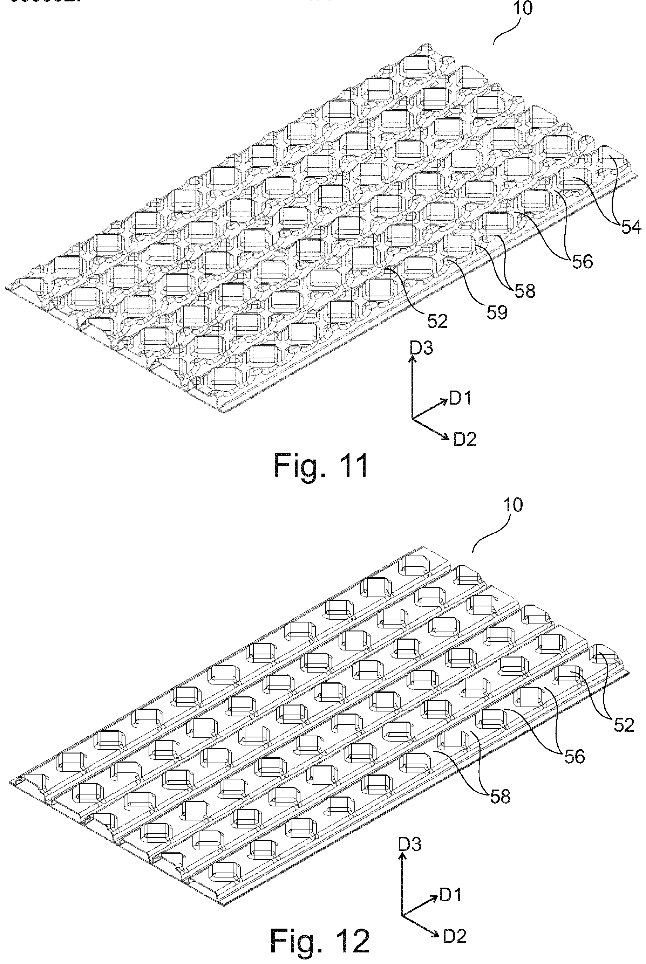

FIG. 4 shows a perspective view of a second embodiment of a battery system 100. The battery system 100 comprises a base plate 10 according to a ninth embodiment described in FIG. 11 and a housing 120. The battery system 100 further comprises a plurality of energy storage units 110 arranged on the base plate 10.

The housing 120 comprises at least one outlet 122. The outlet 122 is fluidically connected to the channels 30 of the base plate 10. The outlet 122 serves for securely guiding vent gases to an outside of the housing 120, the vent gases coming from ones of the plurality of energy storage devices 110 through the channels 30.

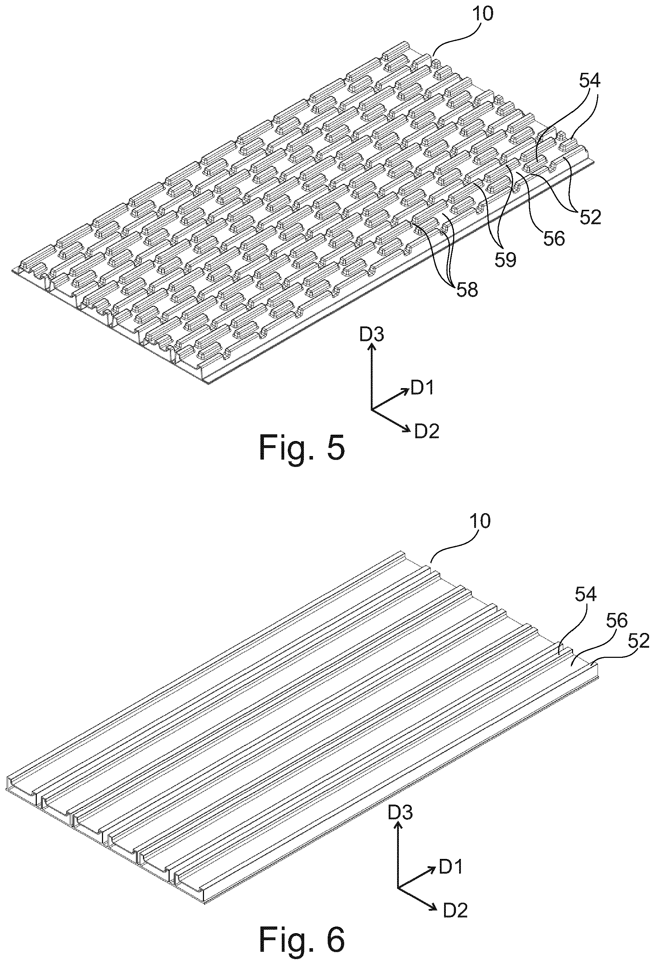

FIG. 5 shows a perspective view of a third embodiment of a base plate 10. The support structure 50 comprises a plurality of first contact surfaces 52, a plurality of second contact surfaces 54, and a plurality of third contact surfaces 59. The plurality of first contact surfaces 52 are arranged in a row extending in the first direction D1. Two adjacent ones of the plurality of first contact surfaces 52 are arranged offset to each other forming a respective void 58. The plurality of second contact surfaces 54 are arranged in a row extending in the first direction D1. Two adjacent ones of the plurality of second contact surfaces 54 are arranged offset to each other forming a respective void 58. The plurality of third contact surfaces 59 are arranged in a row extending in the first direction D1. Two adjacent ones of the plurality of third contact surfaces 59 are arranged offset to each other forming a respective void 58.

The row of the plurality of first contact surfaces 52, the row of the plurality of second contact surfaces 54, and the row of the plurality of third contact surfaces 59, are offset to each other in the second direction D2. The row of the plurality of second contact surfaces 54 is centered along the second direction D2 between the row of the plurality of first contact surfaces 52 and the row of the plurality of third contact surfaces 59.

The plurality of first contact surfaces 52, the plurality of second contact surfaces 54, and the plurality of third contact surfaces 59 have a rectangular shape extending substantially in the first direction D 1. The dimensions of the plurality of first contact surfaces 52 and the plurality of third contact surfaces 59 are the same. The plurality of second contact surfaces 54 have a smaller extension in the first direction D1 than the plurality of first contact surfaces 52 and the plurality of third contact surfaces 59. The voids 58 between two adjacent ones of the plurality of first contact surfaces 52 have the same dimensions as the voids 58 between two adjacent ones of the plurality of third contact surfaces 59. The voids 58 between two adjacent ones of the plurality of second contact surfaces 54 have a greater extension in the first direction D1 than the voids 58 between two adjacent ones of the plurality of first contact surfaces 52 and the voids 58 between two adjacent ones of the plurality of third contact surfaces 59.

The plurality of first contact surfaces 52 and the main surface 56 or the respective voids 58 are arranged in a repeating pattern and the plurality of third contact surfaces 59 and the main surface 56 or the respective voids 58 are also arranged in a repeating pattern. The row or the repeating pattern of the plurality of first contact surfaces 52 is not offset in the first direction D1 to the row or the repeating pattern of the plurality of third contact surfaces 59. The row or the repeating pattern of the plurality of second contact surfaces 54 is offset in the first direction D1 to the row or the repeating pattern of the plurality of first contact surfaces 52.

FIG. 6 shows a perspective view of a fourth embodiment of a base plate 10. The respective support structure 50 of each channel 30 comprises only one first contact surface 52, one second contact surface 54, and one main surface 56. Each of the first contact surface 52, the second contact surface 54, and the main surface 56 extend continuously in the first direction D1 from the first end E1 to the second end E2 of the base plate 10.

The arrangement and continuous design of the first contact surface 52, the second contact surface 54, and the main surface 56 allow to manufacture the base plate 10 not only using a vacuum forming process but also using a cost-effective extrusion process with an extrusion direction along the first direction 10.

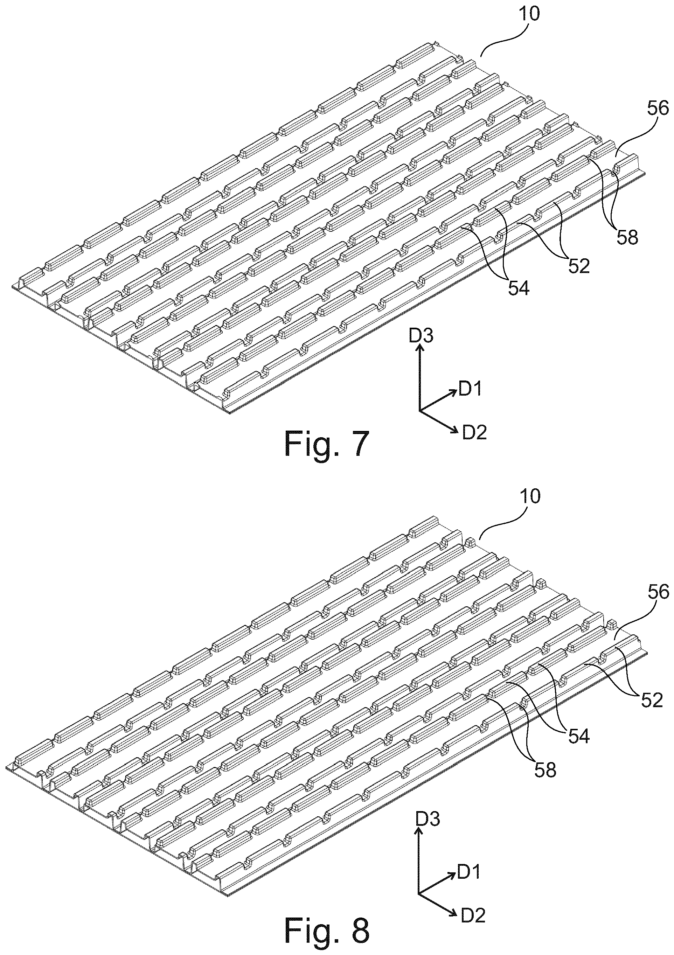

FIG. 7 shows a perspective view of a fifth embodiment of a base plate 10. The base plate 10 according to the fifth embodiment is similar to the base plate 10 according to the third embodiment as shown in FIG. 5, except from the base plate 10 according to the fifth embodiment not comprising any second contact surfaces 54.

FIG. 8 shows a perspective view of a sixth embodiment of a base plate 10. The base plate 10 according to the sixth embodiment is similar to the base plate 10 according to the second embodiment as shown in FIG. 2, except from the base plate 10 according to the sixth embodiment not comprising any second contact surfaces 54.

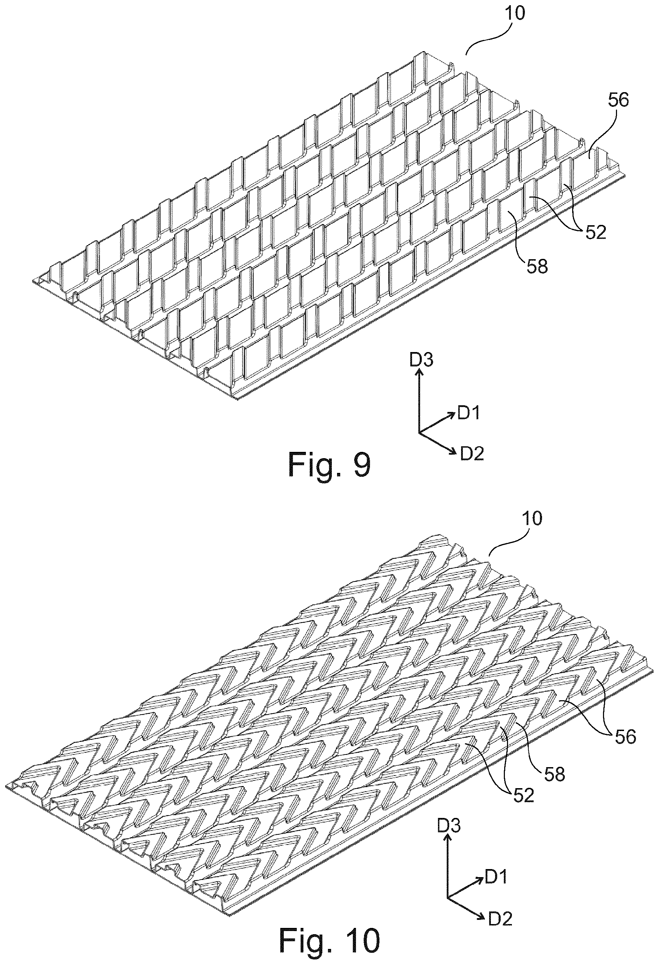

FIG. 9 shows a perspective view of a seventh embodiment of a base plate 10. The respective support structure 50 of the channels 30 of the base plate 10 comprises a plurality of first contact surfaces 52 and a plurality of main surfaces 56. The plurality of first contact surfaces 52 have a trapezium shape and extend substantially in a plane perpendicular to the third direction D3 in a direction tilted 45 degrees to the first direction D1 and tilted 45 degrees to the second direction D2.

FIG. 10 shows a perspective view of an eight embodiment of a base plate 10. The respective support structure 50 of the channels 30 of the base plate 10 comprises a plurality of first contact surfaces 52 and a plurality of main surfaces 56. The plurality of first contact surfaces 52 have an arrow-like shape pointing in the first direction D1.

FIG. 11 shows a perspective view of a ninth embodiment of a base plate 10. The respective support structure 50 of the channels 30 of the base plate 10 comprises a plurality of first contact surfaces 52, a plurality of second contact surfaces 54, a plurality of third contact surfaces 59, and a plurality of main surfaces 56. The plurality of first contact surfaces 52 and the plurality of third contact surfaces 59 have a triangular shape and the plurality of second contact surfaces 54 have a square shape.

FIG. 12 shows a perspective view of a tenth embodiment of a base plate 10. The base plate 10 according to the tenth embodiment is similar to the base plate 10 according to the ninth embodiment as shown in FIG. 11, except from the base plate 10 according to the tenth embodiment not comprising any first contact surfaces 52 and any third contact surfaces 59.

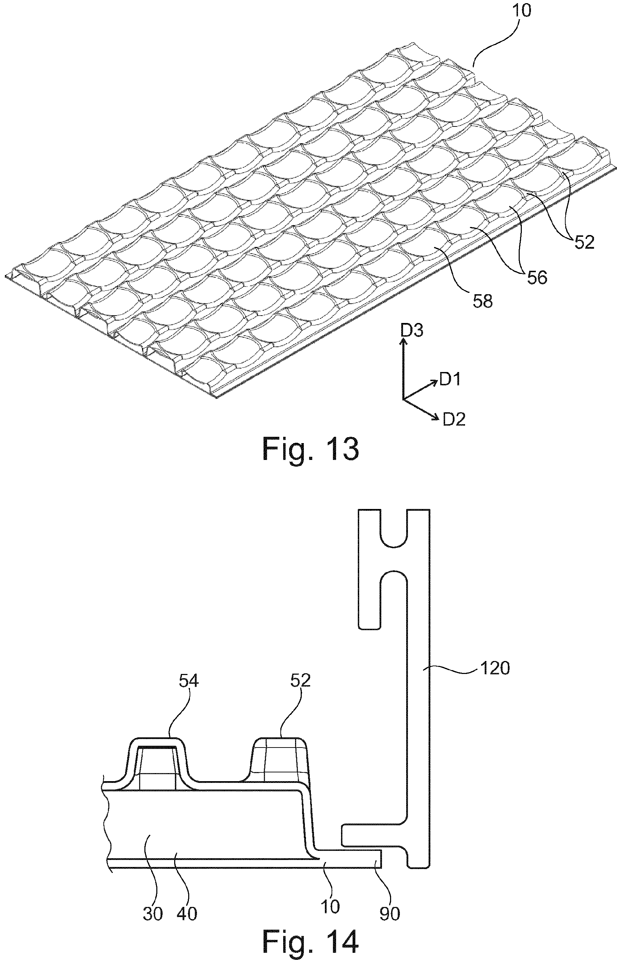

FIG. 13 shows a perspective view of an eleventh embodiment of a base plate 10. The respective support structure 50 of the channels 30 of the base plate 10 comprises a plurality of first contact surfaces 52 and a plurality of main surfaces 56. The plurality of main surfaces 56 have the shape of an inverted spherical segment.

FIG. 14 shows a cross-sectional view of a third embodiment of a battery system 100. The battery system 100 comprises a base plate 10 according to the second embodiment and shown along section line B-B of FIG. 2. The battery system 10 further comprises a housing 120 encompassing the components of the battery system 100. The flange 90 of the base plate 10 is in contact with a matching counterpart surface of the housing 120. The foam 130 of the battery system 100 and arranged within the housing 120 is therefore prevented from leaking at the contact between the flange 90 and the housing 120 to an outside of the housing 120.

The battery system 10 can further comprise a sealing material arranged between the flange 90 and the housing in the area of the contact between the flange 90 and the housing 120 to enhance the tightness of the battery system 100.

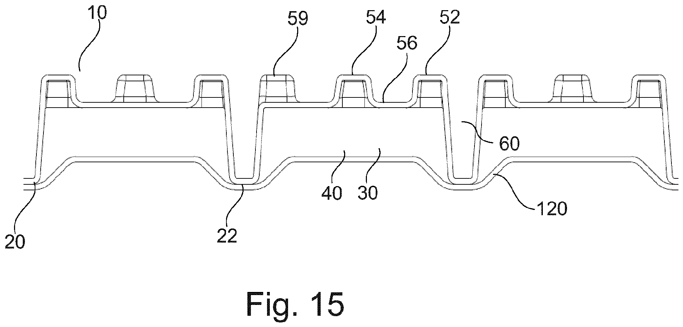

FIG. 15 shows a cross-sectional view of a twelfth embodiment of a base plate 10. The base plate 10 according to the twelfth embodiment is similar to the base plate 10 according to the second embodiment as shown in FIG. 2, except from the open volumes 60 extending in the third direction D3 below the bottom surface 22 of the base body 20. The open volumes 60 are filled with cured foam 130 which is in contact with a part of a housing 120 of a battery system 100 while the bottom surface 22 of the base plate 10 is not in contact with the housing 120.

### LIST OF REFERENCE SIGNS

- 10: base plate
- 20: base body
- 22: bottom surface
- 30: channels
- 40: main volume
- 50: support structure
- 52: first contact surface
- 54: second contact surface
- 56: main surface
- 58: void
- 59: third contact surface
- 60: open volume
- 70: opening
- 80: wall
- 90: flange
- 100: battery system
- 110: energy storage unit
- 112: vent burst disc
- 120: housing
- 122: outlet
- 124: inlet port
- 126: distribution channel
- 130: foam
- 200: vehicle
- D1: first direction
- D2: second direction
- D3: third direction
- E1: first end
- E2: second end
- S1: first side

## Claims

1. A base plate (10) for a battery system (100), the base plate (10) comprising
a base body (20); and
at least two channels (30) extending in a first direction (D1) and offset to each other in a second direction (D2) preferably perpendicular to the first direction (D1), wherein
the at least two channels (30) comprise a main volume (40) and a support structure (50);
the support structure (50) is arranged at a first side (S1) of the main volume (40) and comprises at least one first contact surface (52) contactable with an energy storage unit (110) and at least one main surface (56);
the at least one first contact surface (52) is offset to the at least one main surface (56) in a third direction (D3), wherein the third direction (D3) is perpendicular to the first direction (D1) and the second direction (D2).

2. The base plate (10) of claim 1, wherein the at least two channels (30) are spaced apart in the second direction (D2) to form at least one open volume (60), the at least one open volume (60) extending in the first direction (D1).

3. The base plate (10) of claim 1 or 2, wherein the base plate (10) has a first end (E1) and a second end (E2), wherein the first end (E1) and the second end (E2) are offset to each other in the first direction (D1) and the at least two channels (30) have an opening (70) at the first end (E1) and/or the second end (E2) only.

4. The base plate (10) of any one of the preceding claims, wherein the at least one first contact surface (52) and the at least one main surface (56) are arranged in a repeating pattern.

5. The base plate (10) of any one of the preceding claims, wherein the support structure (50) further comprises at least one second contact surface (54) contactable with an energy storage unit.

6. The base plate (10) of claim 5, wherein the at least one first contact surface (52) and the at least one second contact surface (54) are offset to each other in the first direction (D1) and/or in the second direction (D2).

7. The base plate (10) of claim 6, wherein the at least one second contact surface (54) and the at least one main surface (56) are arranged in a repeating pattern offset in the first direction (D1) with respect to the repeating pattern of the at least one first contact surface (52) and the at least one main surface (56).

8. The base plate (10) of any one of the preceding claims, further comprising a plurality of first contact surfaces (52), wherein the plurality of first contact surfaces (52) have a rectangular shape extending in the first direction (D1).

9. The base plate (10) of claim 8, wherein adjacent ones of the plurality of first contact surfaces (52) in the first direction (D1) are spaced apart by a void (58).

10. The base plate (10) of claim 9, wherein
the support structure (50) further comprises a plurality of third contact surfaces (59) contactable with an energy storage unit and a plurality of second contact surfaces (54) contactable with an energy storage unit;
the plurality of second contact surfaces (54) and the plurality of third contact surfaces (59) have a rectangular shape extending in the first direction (D1);
the plurality of first contact surfaces (52) are arranged in a row extending in the first direction (D1), the plurality of second contact surfaces (54) are arranged in a row extending in the first direction (D1), and the plurality of third contact surfaces (59) are arranged in a row extending in the first direction (D1);
the row of the plurality of first contact surfaces (52), the row of the plurality of second contact surfaces (54), and the row of the plurality of third contact surfaces (59) are offset to each other in the second direction (D2);
adjacent ones of the plurality of second contact surfaces (54) in the first direction (D1) are spaced apart by a void (58) and adjacent ones of the plurality of third contact surfaces (59) in the first direction (D1) are spaced apart by a void (58);
the plurality of third contact surfaces (59) and the at least one main surface (56) are arranged in a repeating pattern offset in the first direction (D1) with respect to the repeating pattern of the plurality of first contact surfaces (52) and the at least one main surface (56) and with respect to the repeating pattern of the plurality of second contact surfaces (54) and the at least one main surface (56).

11. The base plate (10) of any one of the preceding claims, wherein the at least one open volume (60) extends in the third direction (D3) below a bottom surface (22) of the base body (20), such that the at least one open volume (60) extends farther in the third direction (D3) than the at least two channels (30).

12. The base plate (10) of any one of the preceding claims, further comprising at least one flange (90) arranged at least on one side of the base plate (10)

13. Battery system (100) for a vehicle (200), the battery system (100) comprising
a base plate (10) of any one of claims 1 to 12; and
a plurality of energy storage units (110) arranged on the base plate (10).

14. The battery system (100) of claim 13, wherein
each of the plurality of energy storage units (110) comprises a vent burst disc (112); and
the vent burst disc (112) of each of the plurality of energy storage units (110) faces the base plate (10).

15. The battery system (100) of claims 11 or 14, further comprising foam (130) between at least one main surface (56) of the base plate (10) and at least one of the plurality of energy storage units (110).

16. The battery system (100) of any one of the claims 11 to 15, further comprising
a housing (120); and
foam (130) in at least one open volume (60) of the base plate (10).

17. A vehicle (200) comprising a battery system (100) of claims 11 to 16.
